# EUROPEAN PATENT APPLICATION

(11) **EP 1 469 390 A2**
(43) Date of publication of application: **20.10.2004**
(21) Application number: 04009029.2
(22) Date of filing: 15.04.2004
(51) Int. Cl.: G06F 11/16, G06F 11/28

(54) **Fault tolerant Information processing apparatus**

(30) Priority: 18.04.2003 JP 2003114385
(71) Applicant: NEC CORPORATION, Tokyo (JP)
(72) Inventor: Mizutani, Fumitoshi, Minato-ku Tokyo (JP); Shirano, Yasuyuki, Minato-ku Tokyo (JP)
(74) Representative: Glawe. Delfs. Moll

(57) **Abstract**

An information processing apparatus includes two first and second CPU modules (100, 200) which perform the same process in synchronism with each other and an I/O module (300; 400) connected to the CPU modules (100, 200). The I/O module (300, 400) receives output data of the two CPU modules (100, 200) and compares a plurality of output data of the first CPU module (100) and a plurality of output data of the second CPU module (200) with each other with the output data adjusted in order so as to correspond to each other to discriminate whether or not the output data coincide with each other.

## Description

### BACKGROUND OF THE INVENTION

### Field of the Invention

The present invention relates to an information processing apparatus, and more particularly to an information processing apparatus for use with a false-tolerant system.

### Description of the Related Art

Conventionally, in an information processing apparatus for use with a fault-tolerant system, a common clock signal is distributed to dual processors so that the dual processors perform the same process and, every time outputs of the two processors are obtained, they are compared with each other to detect incoincidence of the outputs of the dual processors as disclosed, for example, in Japanese Patent Laid-Open No. 95816/1996 (hereinafter referred to as Patent Document 1) (refer to FIG. 1 of the Patent Document 1).

In the information processing apparatus disclosed in the Patent Document 1, even if each of the dual processors normally operates, an interruption timing for interruption handling of one of the two processors is sometimes displaced from that of the other processor thereby to make the timings or the orders of output data of the two processors different. If the order of the output data of one of the two processors changes, then the output data of the two processors become different from each other at a certain point of time. Therefore, the conventional information processing apparatus for use with a fault-tolerant system has a subject to be solved in that incoincidence of the output data of two processors is detected in error.

### SUMMARY OF THE INVENTION

It is an object of the present invention to provide an information processing apparatus which can discriminate, even when the orders of output data of a plurality of CPU modules differ from each other, whether or not the operations of the CPU modules coincide with each other.

It is another object of the present invention to provide an information processing apparatus which can discriminate, even if any of output data of a plurality of CPU modules is interrupted, whether or not the operations of the CPU modules coincide with each other.

In order to attain the objects described above, according to an aspect of the present invention, there is provided an information processing apparatus, comprising first and second information processing means for performing the same process in synchronism with each other, and adjustment means for adjusting orders of output data from the first and second information processing means so as to correspond to each other to discriminate whether or not the output data coincide with each other.

Preferably, the adjustment means includes first storage means for storing the output data of the first information processing means and second storage means for storing the output data of the second information processing means.

The adjustment means may compare, when the amount of output data stored in any one of the first and second storage means reaches a predetermined amount, the output data of the first information processing means stored in the first storage means and the output data of the second information processing means stored in the second storage means with each other with the output data adjusted in order so as to correspond to each other to discriminate whether or not the output data coincide with each other.

The adjustment means may further include designation means for designating the frequency with which the discrimination is to be performed to a frequency lower than a frequency with which the output data of the first and second information processing means are received.

The information processing apparatus is provided with the adjustment means which receives output data of the first and second information processing means and compares a plurality of output data of the first information processing means and a plurality of output data of the second information processing means with each other with the output data adjusted in order so as to correspond to each other. Consequently, even if the orders of the output data of the first and second information processing means are different from each other, it can be discriminated whether or not the operations of the first and second information processing means coincide with each other.

According to another aspect of the present invention, there is provided an information processing apparatus, comprising first and second information processing means for performing the same process in synchronism with each other, and adjustment means including re-construction means for re-constructing a plurality of output data of the second information processing means based on a plurality of output data of the first information processing means, and comparison means for comparing the output data of the first information processing means and the output data of the second information processing means re-constructed by the re-construction means with each other.

Preferably, the adjustment means includes first storage means for storing the output data of the first information processing means and second storage means for storing the output data of the second information processing means, and the re-construction means changes the order of the output data of the second information processing means stored in the second storage means based on the order of the output data of the first information processing means stored in the first storage means .

Alternatively, the adjustment means may include first storage means for storingthe output data of the first information processing means and second storage means for storing the output data of the second information processing means, and the re-construction means may divide and re-couple the output data of the second information processing means stored in the second storage means based on the output data of the first information processing means stored in the first storage means.

The information processing apparatus is provided with the re-construction means for re-constructing a plurality of output data of the second information processing means based on a plurality of output data of the first information processing means and the comparison means for comparing the output data of the first information processing means and the output data of the second information processing means re-constructed by the re-construction means with each other. Consequently, even if some of the output data from the first or second information processing means is in a state wherein it is interrupted and partly coupled to another output data, it can be discriminated whether or not the operations of the first and second information processing means coincide with each other.

According to a further aspect of the present invention, there is provided an information processing apparatus, comprising first and second information processing means for performing the same process in synchronism with each other, and adjustment means for selecting one of data of a second output of the second information processing means which corresponds to one of data of a first output of the first information processing means to detect whether or not the data of the first and second outputs coincide with each other.

Preferably, the adjustment means includes first storage means for storing the data of the first output of the first information processing means and second storage means for storing the data of the second output of the second information processing means, and the adjustment means searches the second storage means for one of the data of the second output corresponding to one of the data of the first output of the first information processing means stored in the first storage means.

The information processing apparatus is provided with the adjustment means for receiving output data of the first and second information processing means, selecting one of data of a second output of the second information processing means which corresponds to one of data of a first output of the first information processing means and comparing the data of the first output and the data of the second output with each other to detect whether or not the data of the first and second outputs coincide with each other. Consequently, the output data of the first and second information processing means which indicate coincidence need not be stored. Therefore, the first and second storage means can be formed with a comparatively small capacity.

The above and other objects, features and advantages of the present invention will become apparent from the following description and the appended claims, taken in conjunction with the accompanying drawings in which like parts or elements are denoted by like reference symbols.

### BRIEF DESCRIPTION OF THE DRAWINGS

FIG. 1 is a block diagram showing an information processing apparatus to which the present invention is applied;
FIGS. 2 to 4 are diagrammatic views illustrating different manners of operation of the information processing apparatus of FIG. 1; and
FIGS. 5 and 6 are block diagrams showing modifications to the information processing apparatus of FIG. 1.

### DESCRIPTION OF THE PREFERRED EMBODIMENT

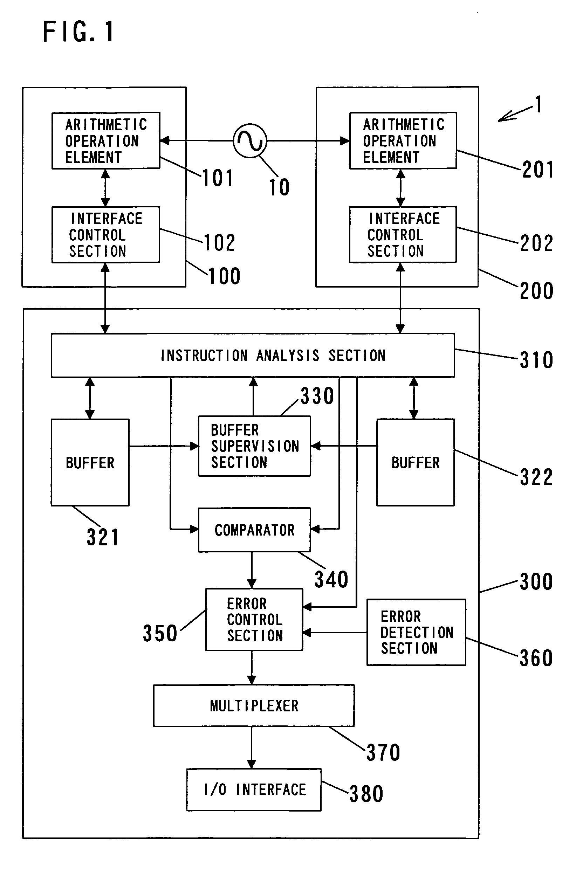

Referring first to FIG. 1, there is shown an information processing apparatus to which the present invention is applied. The information processing apparatus shown is generally denoted by 1 and includes two CPU modules 100 and 200 serving as first and second information processing means, a single I/O module 300 serving as adjustment means, and a clock generation section 10 common to the two CPU modules 100 and 200. In the present embodiment, the single I/O module 300 is connected to the two CPU modules 100 and 200.

It is to be noted that each of the CPU modules 100 and 200 may otherwise be connected to a plurality of I/O modules 300. The CPU modules 100 and 200 and the I/O module or modules 300 may be connected, for example, by the Peripheral Components Interconnect (PCI)-Express or the like.

The first CPU module 100 includes an arithmetic operation element 101 and an interface control section 102. The second CPU module 200 includes an arithmetic operation element 201 and an interface control section 202 similarly to the first CPU module 100.

The two CPU modules 100 and 200 are configured so as to execute the same operation simultaneously. A common clock signal from the clock generation section 10 is supplied to the CPU modules 100 and 200. Further, one of the CPU modules 100 and 200 operates as a master module while the other operates as a partner module. In the present embodiment, the first CPU module 100 operates as a master module while the second CPU module 200 operates as a partner module.

The arithmetic operation elements 101 and 201 execute the same process in synchronism with the common clock signal from the common clock generation section 10. The arithmetic operation elements 101 and 201 may be formed from a single processor or from a plurality of processors.

The interface control section 102 serves as an interface from the first CPUmodule 100 to the I/O module 300. The interface control section 102 further performs production of a parity and/or an error correcting code (ECC) and performs, if it is connected to a plurality of I/O modules 300, bridging to the I/O modules 300. The interface control section 202 has a configuration similar to that of the interface control section 102.

The I/O module 300 includes an instruction analysis section 310, buffers 321 and 322 serving as first and second storage means, respectively, a buffer supervision section 330, a comparator 340, an error control section 350, an error detection section 360, a multiplexer 370 and an I/O interface 380.

The instruction analysis section 310 re-constructs, in response to a comparison starting signal received from the buffer supervision section 330, aplurality of output data of thepartner CPU module 200 stored in the second buffer 322 so as to correspond in order to a plurality of output data of the master CPU module 100 stored in the first buffer 321.

As one of reconstruction operations, the instruction analysis section 310 particularly re-arranges the order of a plurality of output data of the partner CPU module 200 stored in the second buffer 322 based on the order of a plurality of output data of the master CPU module 100 stored in the first buffer 321.

As another one of the reconstruction operations, the instruction analysis section 310 particularly divides and re-couples a plurality of output data of the partner CPU module 200 stored in the second buffer 322 based on a plurality of output data of the master CPU module 100 stored in the first buffer 321.

The instruction analysis section 310 signals a plurality of output data of the master CPU module 100 read out from the first buffer 321 and a plurality of output data of the partner CPU module 200 read out from the second buffer 322 and re-constructed to the comparator 340. If the instruction analysis section 310 fails to make a plurality of output data of the partner CPU module 200 stored in the second buffer 322 correspond in order to a plurality of output data of the master CPU module 100 from the first buffer 321, it notifies the error control section 350 that the orders of the output data do not coincide with each other.

The first and second buffers 321 and 322 are provided in a corresponding relationship to the two CPU modules 100 and 200, respectively. The first buffer 321 stores a plurality of output data from the master CPU module 100. The second buffer 322 stores a plurality of output data from the partner CPU module 200. Each of the output data of the CPU modules 100 and 200 includes a command part including a command, an address and so forth and a data part including at least one data value, and information stored in each of entries of the buffers 321 and 322 includes a command part and a data part. In the present embodiment, one output unit from the CPU modules 100 and 200 is packet. One packet includes, as a unit of a command such as a reading command or a writing command outputted from the arithmetic operation elements 101 and 201, the command, data incidental to the command and so forth. Each data is formed from a plurality of units.

Each of the two buffers 321 and 322 has a plurality of entries. Each of the entries of the buffers 321 and 322 stores a packet from a corresponding one of the two CPU modules 100 and 200. The number of entries of the buffers 321 and 322 is 10 to 20 in the present embodiment. Each of the buffers 321 and 322 may be divided into a command region for storing the command parts of packets and a data region for storing the data parts of the packets.

The buffer supervision section 330 supervises the used amounts of the individual buffers 321 and 322, that is, the numbers of stored entries of output data from the two CPU modules 100 and 200. The buffer supervision section 330 supervises to discriminate whether or not at least one of the buffers 321 and 322 reaches a predetermined amount. When the buffer supervision section 330 detects that the used amount of at least one of the buffers 321 and 322 reaches the predetermined amount, it signals a comparison starting signal to the instruction analysis section 310.

The comparator 340 successively receives a plurality of output data of the master CPU module 100 successively read out from the first buffer 321 and a plurality of output data of the partner CPU module 200 successively read out from the second buffer 322 and re-constructed from the first buffer 321 and successively compares the received output data with each other. The comparator 340 compares the data part included in an output data of the master CPU module 100 and the data part included in an output data of the partner CPU module 200 with each other. If a result of the data comparison indicates incoincidence of the data, the comparator 340 notifies the error control section 350 that the output data of the two CPU modules 100 and 200 do not coincide with each other. On the other hand, if the data coincide with each other, then since the state of the information processing apparatus 1 need not be changed, the comparator 340 need not perform anything. Or, in this instance, the comparator 340 may otherwise send a notification that the output data of the two CPU modules 100 and 200 coincide with each other to the error control section 350 so that the error control section 350 may control the multiplexer 370 to continuously signal the output data of the master CPU module 100 to the I/O interface 380.

The error control section 350 receives a notification of whether or not the orders coincide with each other from the instruction analysis section 310, another notification of whether or not the output data coincide with each other from the comparator 340 and a further notification of whether or not an error of a hardware failure exists from the error detection section 360. Then, the error control section 350 controls the multiplexer 370 based on the notifications to select one of the output data of the CPU modules 100 and 200 to be outputted.

The error detection section 360 detects a parity error, a protocol error or a timeout of a packet signaled from each of the two CPU modules 100 and 200 to the I/O module 300 and notifies the error control section 350 of the detected error or timeout as a hardware failure.

The multiplexer 370 outputs one of output data of the two CPU modules 100 and 200 to the I/O interface 380 in accordance with an instruction from the error control section 350.

The I/O interface 380 receives one of the output data of the two CPU modules 100 and 200 from the multiplexer 370 and outputs the received output data to an I/O apparatus connected to the I/O module 300.

Subsequently, operation of the information processing apparatus 1 of the present embodiment described above is described.

Referring to FIG. 1, the two CPUmodules 100 and 200 execute the same process in synchronism with the common clock signal from the clock generation section 10. Data of one of the outputs of the two CPU modules 100 and 200 are sent to the I/O apparatus through the I/O interface 380 of the I/O module 300. Unless a failure of the master CPU module 100 is detected, the output data of the first CPU module 100 are sent to the I/O interface 380.

The partner CPUmodule 200 is provided in order to implement a dual configuration. If a failure of the master CPU module 100 is detected, then the first CPU module 100 is disconnected, and the partner CPU module 200 serves as an alternative CPU module and the output data of the second CPU module 200 are sent to the I/O interface 380. Further, if it is detected that the partner CPU module 200 is in failure, then the second CPU module 200 is disconnected and the output data of the first CPU module 100 are continuously sent to the I/O interface 380.

The arithmetic operation element 101 of the master CPU module 100 and the arithmetic operation element 201 of the partner CPU module 200 execute the same operation in synchronism with the common clock signal. The arithmetic operation elements 101 and 201 simultaneously output results of the same process in the same clock cycle. The arithmetic operation element 101 outputs a packet of the result of the process to the interface control section 102. The arithmetic operation element 201 outputs a packet of the result of the process to the interface control section 202.

The interface control section 102 signals the output data from the arithmetic operation element 101 to the I/O module 300. The interface control section 202 signals the output data from the arithmetic operation element 201 to the I/O module 300.

In the I/O module 300, the instruction analysis section 310 decomposes the packet received from the master CPU module 100 into a command part and a data part and stores them into the first buffer 321. The instruction analysis section 310 decomposes the packet received from the partner CPU module 200 into a command part and a data part and stores them into the second buffer 322.

The first buffer 321 stores a plurality of packets from the master CPU module 100 individually into a plurality of entries. The second buffer 322 stores a plurality of packets from the partner CPU module 200 individually into a plurality of entries.

The buffer supervision section 330 supervises the number of those entries in which packets are stored for each of the two buffers 321 and 322. If the buffer supervision section 330 detects that the number of entries in which packets are stored reaches a predetermined value in at least one of the first buffer 321 and the second buffer 322, then it produces and signals a comparison starting signal to the instruction analysis section 310. At this time, the buffer in which the predetermined value is reached issues a request for re-transmission to the corresponding CPU module and does not receive the immediately succeeding packet. The other buffer in which the predetermined value is not reached receives a packet or packets from the corresponding CPU module until a number of packets equal to the number of packets received by the buffer in which the predetermined value is reached are received.

If the instruction analysis section 310 receives the comparison starting signal from the buffer supervision section 330, then it discriminates whether or not the packets stored in the first buffer 321 and the packets stored in the second buffer 322 coincide in order with each other and changes the order of the packets stored in the second buffer 322 so that the order may coincide with the order of the packets stored in the first buffer 321.

More particularly, the instruction analysis section 310 uses the command part (command and address) included in each packet to discriminate to which one of packets of the second buffer 322 each packet of the first buffer 321 corresponds and re-arrange the packets of the second buffer 322. The instruction analysis section 310 outputs the packets read out from the first buffer 321 and the packets read out from the second buffer 322 and having an order changed as occasion demands to the comparator 340.

If the instruction analysis section 310 discriminates that it is impossible to make the order of the packets stored in the first buffer 321 and the order of the packets stored in the second buffer 322 coincide with each other, then it notifies the error control section 350 of a signal representing that the orders do not coincide with each other.

The comparator 340 successively receives the packets stored in the first buffer 321 and the packets stored in the first buffer 321 and having an order re-arranged as occasion demands from the instruction analysis section 310 and compares corresponding ones of the packets with each other. The comparator 340 performs the comparison using the data parts of the packets.

When the comparator 340 detects coincidence of the data parts, it need not do anything because the state of the information processing apparatus 1 need not be changed. If necessary in this instance, however, the comparator 340 may send to the error control section 350 a notification that the output data coincide with each other. Upon reception of the notification, the error control section 350 controls the multiplexer 370 to continuously signal the output data of the master CPU module 100 to the I/O interface 380.

On the other hand, if the comparator 340 detects that at least one set of mutually corresponding packets exhibits incoincidence, then it notifies the error control section 350 of the incoincidence.

If the error control section 350 receives a notification of incoincidence of the orders from the instruction analysis section 310 or receives an notification of incoincidence of the output data from the comparator 340 but does not receive a notification from the error detection section 360 that an error of a hardware failure exists, then it executes a synchronism restoration process for the two CPU modules 100 and 200. In the synchronism restoration process, all stored contents of memories and all stored contents of registers involved are copied from the master CPU module 100 into the partner CPU module 200, and the two CPU modules 100 and 200 are reset simultaneously to re-establish the synchronism between them.

If an error of a hardware failure exists, that is, if a notification that an error of a hardware failure exists is received from the error detection section 360, then the error control section 350 performs a disconnection process of the first CPU module 100 or 200 which has been diagnosed as being in failure. If it is diagnosed that the master CPU module 100 is in failure, then the error control section 350 controls the multiplexer 370 to change over so that the output data of the partner CPU module 200 may be signaled to the I/0 interface 380 thereby to execute a changeover process from the master CPU module 100 to the partner CPU module 200 and execute a disconnection process of the master CPU module 100. On the other hand, if it is diagnosed that the partner CPU module 200 is in failure, then the error control section 350 controls the multiplexer 370 so that the output data of the master CPU module 100 may be continuously signaled to the I/O interface 380 thereby to execute a disconnection process of the partner CPU module 200.

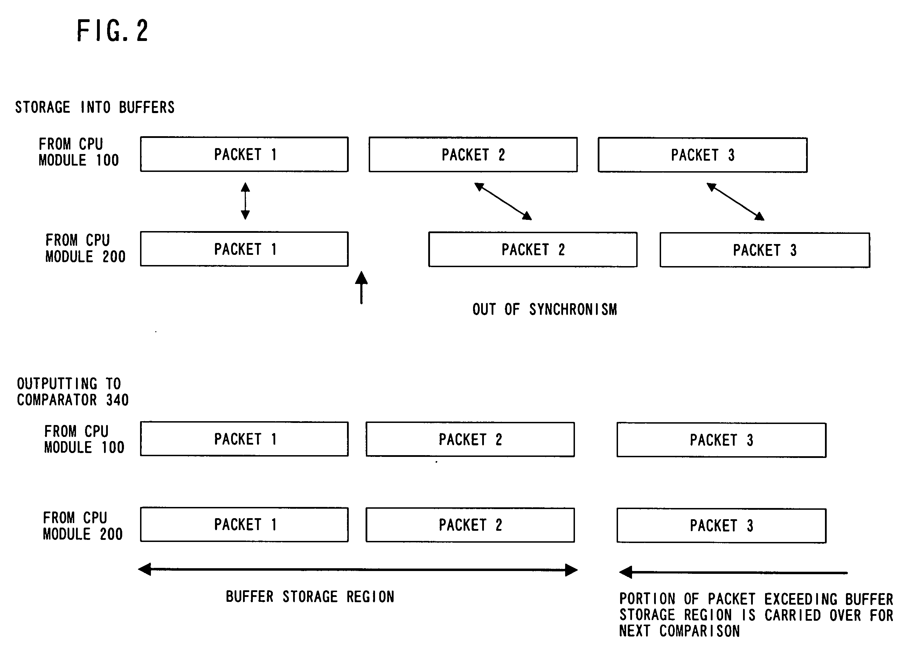

Referring particularly to FIG. 2, when the timings at which the output of the master CPU module 100 and the output of the partner CPU module 200 are displaced from each other, a plurality of output data of the master CPU module 100 and a plurality of output data of the partner CPU module 200 are compared with each other without being influenced by the displacement in timing.

A packet #1 outputted from the master CPU module 100 and a packet #1 outputted from the partner CPU module 200 are received at the same timing by the I/O module 300 and are stored into the first and second buffers 321 and 322, respectively. The timing at which the I/O module 300 receives a packet #2 outputted from the master CPU module 100 and the timing at which the I/O module 300 receives a packet #2 outputted from the partner CPU module 200 are different from each other. Further, also the timing at which the I/O module 300 receives a packet #3 outputted from the master CPU module 100 and the timing at which the I/O module 300 receives a packet #3 outputted from the partner CPU module 200 are displaced from each other. In this instance, the packets #2 and the succeeding packets from the master CPU module 100 and the partner CPU module 200 are received at displaced timings from each other by the I/O module 300. However, since those packets are stored once into the buffers 321 and 322 and then sent to the comparator 340, there is no influence of the displacements in timing, and it is detected by the comparator 340 that the packets are same as each other without being re-arranged.

In the example described, the packets #3 are not fully placed into the buffers 321 and 322. For any packet which has not been accommodated into a buffer, a request for re-transmission is issued, and the packet is determined as an obj ect of re-arrangement and comparison in the succeeding cycle.

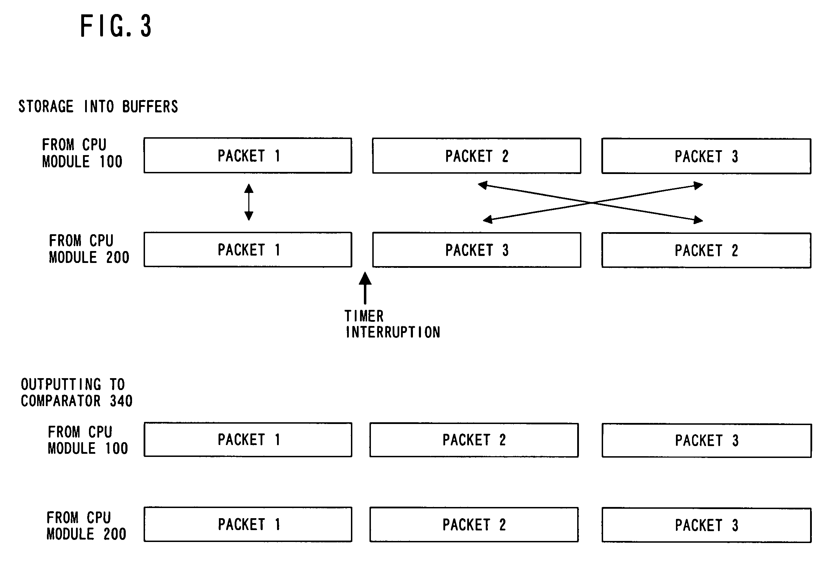

Referring now to FIG. 3, where the order of output data of the partner CPU module 200 is different from the order of output data of the master CPUmodule 100, the instruction analysis section 310 changes the order of output data of the partner CPU module 200 in accordance with the order of output data of the master CPU module 100 and thereby detects that the output data of the master CPU module 100 and the output data of the partner CPU module 200 coincide with each other. Such a difference between the order of output data of the master CPU module 100 and the order of output data of the partner CPU module 200 as just described is caused by a displacement between timings of the interruption processes of the two CPU modules 100 and 200 by timer interruption or the like.

For example, the master CPU module 100 executes processing for a packet #2 by timer interruption after processing for a packet #1 and then executes ordinary processing of a packet #3. The I/O module 300 receives the output data of the master CPU module 100 successively in order of the packet #1, packet #2 and packet #3.

On the other hand, the partner CPU module 200 processes the packet #2 and the packet #3 in the reverse order due to displacement in timing of the timer interruption process. In particular, the partner CPUmodule 200 first processes the packet #1 and then processes the packet #3, whereafter it accepts a timer interruption process and executes processing of the packet #2. The I/O module 300 receives the output data of the partner CPU module 200 successively in order of the packet #1, packet #3 and packet #2. The instruction analysis section 310 re-arranges the order of the packet #1, packet #3 and packet #2 of the output data of the partner CPU module 200 to another order of the packet #1, packet #2 and packet #3 based on the order of the packet #1, packet #2 and packet #3 of the output data of the master CPU module 100. The comparator 340 detects coincidence between the output data of the master CPU module 100 and the output data of the partner CPU module 200.

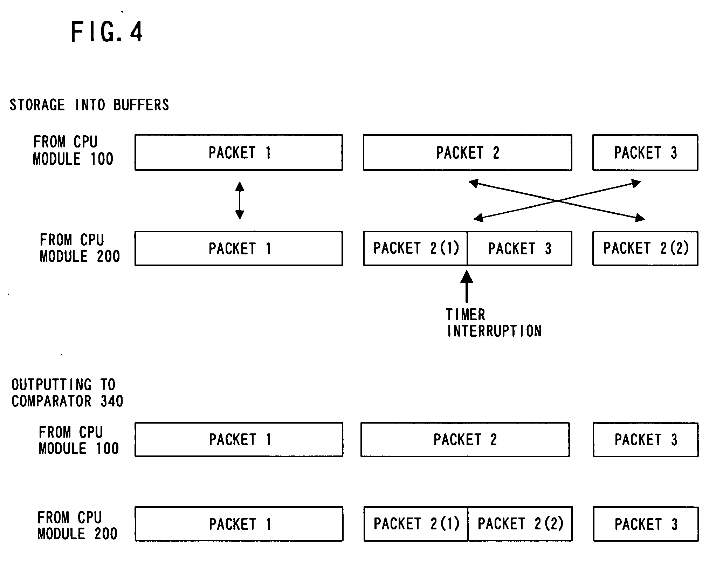

Referring to FIG. 4, if the output data of the partner CPU module 200 is interrupted with respect to the output data of the master CPU module 100, a plurality of output data of the partner CPU module 200 are individually re-constructed so as to individually correspond to a plurality of output data of the master CPU module 100.

The master CPU module 100 executes ordinary processing for a packet #1 and another packet #2 in this order and then executes processing for a packet #3 by timer interruption. The I/O module 300 successively receives the packet #1, packet #2 and packet #3 of the output data of the master CPU module 100 in this order.

On the other hand, the partner CPU module 200 executes processing for a packet #3 as a result of interruption occurring during processing of a packet #2 after processing of a packet #1. The packet #2 is divided into a packet #2(1) and another packet #2(2). The I/O module 300 successively receives the packet #1, a packet composed of the packet #2(1) and the packet #3 and the packet #2(2) of the output data of the partner CPU module 200 in this order.

The instruction analysis section 310 decomposes the packet composed of the packet #2(1) and the packet #3 into the packet #2(1) and the packet #3. Further, the instruction analysis section 310 exchanges the packet #3 and the packet #2(2) in order and couples the packet #2(1) and the packet #2(2) . The comparator 340 detects that the output data of the master CPU module 100, that is, the packet #1, packet #2 and packet #3, coincide with the output data of the partner CPU module 200, that is, the packet #1, the packet #2 obtained by the coupling of the packet #2(1) and the packet #2(2) and the packet #3.

In this manner, in the present embodiment, only it is necessary that, within a certain period, a plurality of packets individually same as packets stored in the first buffer 321 be stored in the second buffer 322 in proper quantities.

As described above, the information processing apparatus 1 includes the I/O module 300 which re-arranges the order of a plurality of output data of the partner CPU module 200 so as to correspond to the order of a plurality of output data of the master CPU module 100 and then compares the output data with each other. Therefore, even where the orders of output data of a plurality of CPU modules are different from each other, it is possible to discriminate whether or not the operations of the CPU modules coincide with each other.

Further, in the present embodiment, the I/O module 300 is provided which divides and re-couples a plurality of output data of the partner CPU module 200 so as to correspond to the order of a plurality of output data of the master CPU module 100 and then compares the output data with each other. Consequently, even if one of output data of a plurality of CPU modules is interrupted and coupled to a different output data, it is possible to discriminate whether or not the operations of the CPU modules coincide with each other.

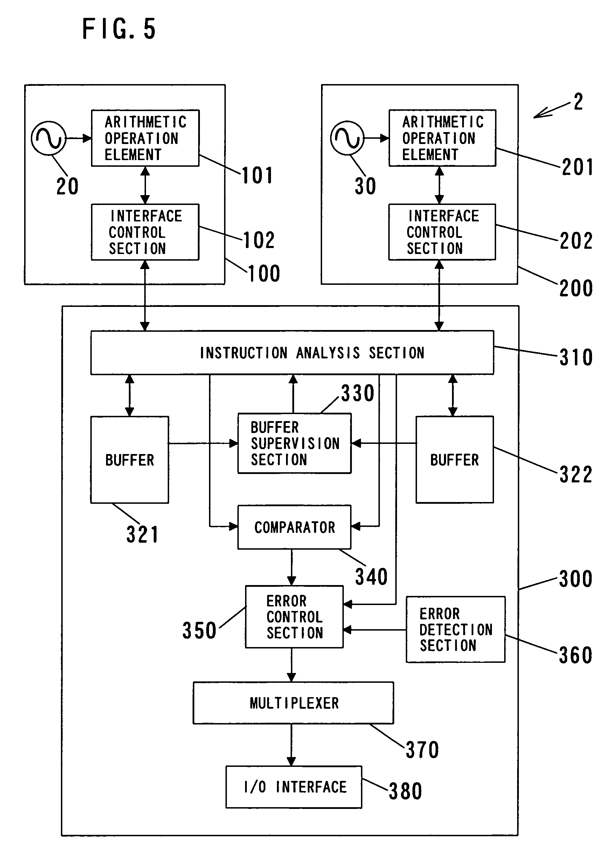

Now, a modification to the information processing apparatus 1 described above is described with reference to FIG. 5.

The modified information processing apparatus 2 is similar in configuration to the information processing apparatus 1 described hereinabove with reference to FIG. 1 except that clock elements 20 and 30 are provided in the CPU modules 100 and 200, respectively.

In particular, the first CPU module 100 includes the clock element 20 while the second CPU module 200 includes the clock element 30. The clock elements 20 and 30 have an equal clock rate. The clock elements 20 and 30 are synchronized with each other with a reset signal upon initialization of the information processing apparatus 2 or the like.

The arithmetic operation element 101 receives and operates with a clock signal from the clock element 20. The arithmetic operation element 201 receives and operates with a clock signal from the clock element 30.

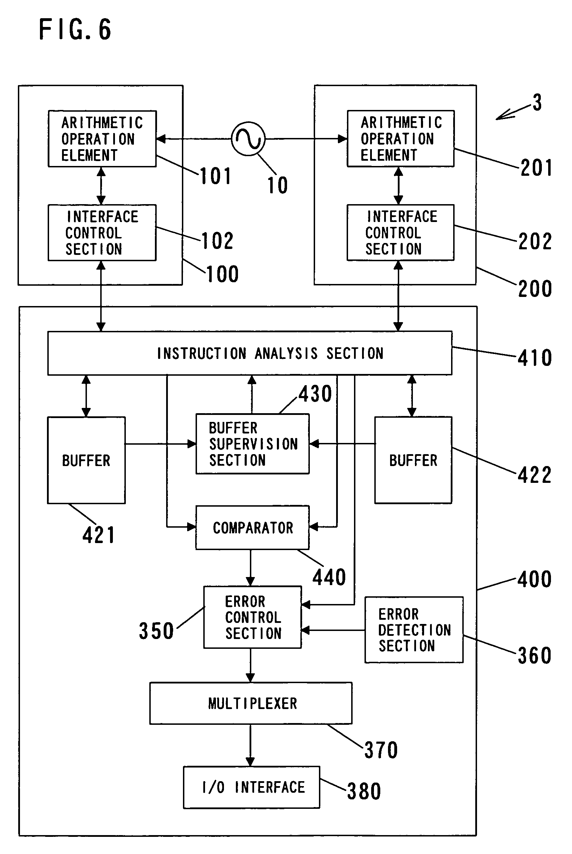

Another modification to the information processing apparatus 1 is shown in FIG. 6.

Referring to FIG. 6, the modified information processing apparatus 3 is similar in configuration to but is different from the information processing apparatus 1 described hereinabove with reference to FIG. 1 in that, every time output data of the two CPU modules 100 and 200 are received, it is discriminated whether or not the orders of the output data coincide with each other.

In particular, referring to FIG. 6, the modified information processing apparatus 3 is different from the information processing apparatus 1 only in that it includes an I/O module 400 in place of the I/O module 300 shown in FIG. 1. The I/O module 400 includes a instruction analysis section 410, two first and second buffers 421 and 422, a buffer supervision section 430, a comparator 440, an error control section 350, an error detection section 360, a multiplexer 370 and an I/O interface 380. The error control section 350, error detection section 360, multiplexer 370 and I/O interface 380 are similar to those in the first embodiment described hereinabove with reference to FIG. 1.

Now, operation of the information processing apparatus 3 is described.

In the I/O module 400, the instruction analysis section 410 decomposes a packet received from the master CPU module 100 into a command part and a data part and stores them into the first buffer 421. Further, the instruction analysis section 410 decomposes a packet received from the partner CPU module 200 into a command part and a data part and stores them into the second buffer 422.

The instruction analysis section 410 reds out the command part of the top one of entries of the first buffer 421 corresponding to the master CPU module 100 and searches the second buffer 422 for a command part same as the read out command part. If the same command part is found out from within the second buffer 422, then the instruction analysis section 410 reads out the data parts corresponding to the command part from the first and second buffers 421 and 422 and outputs the read out data parts to the comparator 440.

The comparator 440 compares the data part read out from the first buffer 421 and the data part read out from the second buffer 422 with each other. At this time, the order of output data received from the partner CPU module 200 by the instruction analysis section 410 and the order of output data received from the instruction analysis section 410 by the comparator 440 are different as occasion demands. More particularly, the order of output data sent from the instruction analysis section 410 to the comparator 440 has been changed so as to correspond to the order of output data received by the master CPU module 100.

In the present modification, the instruction analysis section 410 may discriminate whether or not the command parts of packets received from the two CPU modules 100 and 200 correspond to each other before the packets are stored into the buffers.

In this manner, in the present modification, since packets which indicate coincidence are not stored into the buffers but are sent to the I/O interface 380, the buffers for storing packets may be formed with a comparatively small capacity.

It is to be noted that, while, in the embodiment and the modifications described above, one buffer corresponds to one CPU module, a plurality of buffers may otherwise correspond to one CPU module. In this instance, the throughput in re-arrangement of packets can be improved.

Further, while, in the embodiment and the modifications described above, coincidence of the orders of output data of the two CPU modules 100 and 200 is discriminatedusing information included originally in the output data, each of the CPU modules 100 and 200 may otherwise add information indicative of an order of output data to the output data. In this instance, the instruction analysis section uses the information indicative of the orders of output data to discriminate coincidence of the orders.

While a preferred embodiment of the present invention has been described using specific terms, such description is for illustrative purposes only, and it is to be understood that changes and variations may be made without departing from the spirit or scope of the following claims.

## Claims

1. An information processing apparatus, **characterized in that** it comprises:
first and second information processing means (100, 200) for performing the same process in synchronism with each other; and
adjustment means (300) for adjusting orders of output data from said first and second information processing means so as to correspond to each other to discriminate whether or not the output data coincide with each other.

2. An information processing apparatus as set forth in claim 1, **characterized in that** said adjustment means (300) includes first storage means (321) for storing the output data of said first information processing means (100) and second storage means (322) for storing the output data of said second information processing means (200).

3. An information processing apparatus as set forth in claim 2, **characterized in that** said adjustment means (300) compares, when the amount of output data stored in any one of said first and second storage means (322) reaches a predetermined amount, the output data of said first information processing means (100) stored in said first storage means (321) and the output data of said second information processing means (200) stored in said second storage means (322) with each other with the output data adjusted in order so as to correspond to each other to discriminate whether or not the output data coincide with each other.

4. An information processing apparatus as set forth in claim 2, **characterized in that** said adjustment means (300) further includes designation means for designating the frequency with which the discrimination is to be performed to a frequency lower than a frequency with which the output data of said first and second information processing means (100, 200) are received.

5. An information processing apparatus, **characterized in that** it comprises:
first and second information processing means (100, 200) for performing the same process in synchronism with each other; and
adjustment means (300) including re-construction means (310) for re-constructing a plurality of output data of said second information processing means (200) based on a plurality of output data of said first information processing means (100); and
comparison means (340) for comparing the output data of said first information processing means (100) and the output data of said second information processing means (200) re-constructed by said re-construction means (310) with each other.

6. An information processing apparatus as set forth in claim 5, **characterized in that** said adjustment means (300) includes first storage means (321) for storing the output data of said first information processing means (100) and second storage means (322) for storing the output data of said second information processing means (200), and said re-construction means (310) changes the order of the output data of said second information processingmeans (200) stored in said second storage means (322) based on the order of the output data of said first information processing means (100) stored in said first storage means (321).

7. An information processing apparatus as set forth in claim 5, **characterized in that** said adjustment means (300) includes first storage means (321) for storing the output data of said first information processing means (100) and second storage means (322) for storing the output data of said second information processing means (200), and said re-construction means (310) divides and re-couples the output data of said second informationprocessingmeans (200) stored in said second storage means (322) based on the output data of said first information processingmeans (100) stored in said first storage means (321).

8. An information processing apparatus, **characterized in that** it comprises:
first and second information processing means (100, 200) for performing the same process in synchronism with each other; and
adjustment means (400) for selecting one of data of a second output of said second information processing means (200) which corresponds to one of data of a first output of said first information processing means (100) to detect whether or not the data of the first and second outputs coincide with each other.

9. An information processing apparatus as set forth in claim 8, **characterized in that** said adjustment means (400) includes first storage means (421) for storing the data of the first output of said first information processing means (100) and second storage means (422) for storing the data of the second output of said second information processing means (200), and said adjustment means (400) searches said second storage means (322) for one of the data of the second output corresponding to one of the data of the first output of said first information processing means (100) stored in said first storage means (421).
